# EUROPEAN PATENT APPLICATION

(11) **EP 1 731 485 A1**
(43) Date of publication of application: **13.12.2006**
(21) Application number: 04724837.2
(22) Date of filing: 31.03.2004
(51) Int. Cl.: C02F 1/28, C02F 1/52, C02F 1/66, C02F 9/00

(54) **METHOD OF TREATING STRONGLY ACID WASTEWATER CONTAINING HARMFUL SUBSTANCE**

(71) Applicant: National University Corporation Kagawa University, Takamatsu-shi, Kagawa 760-0016 (JP); ONC Co., Ltd., Tokyo 103-0004 (JP)
(72) Inventor: KAKEGAWA, Hisao, Tokushima-shi, Tokushima 770-0852 (JP); SUENAGA, Yoshihiro, Kita-gun, Kagawa 761-0121 (JP); KAKINUMA, Syuzo, Matsudo-shi, Chiba 270-2221 (JP)
(74) Representative: Geyer, Ulrich F.
(86) International application number: PCT/JP2004/004753
(87) International publication number: WO 2005/100253

(57) **Abstract**

This invention provides a method of removing toxic substances such as fluorine, boron, copper, lead, arsenic, hexavalent chromium, and cadmium from strongly acid wastewater safely and without fail. The method comprises the steps of (i) adding hydroxyapatite 11 to strongly acid wastewater 1A to precipitate its toxic substances as solid constituents, (ii) adding an alkaline substance 12 to the wastewater 1A to neutralize it, (iii) adding a coagulant 13 to the wastewater 1A to coagulate the precipitated solid constituents, and (iv) removing the coagulated solid constituents from the wastewater 1A. According to this method, toxic substances in the strongly acid wastewater 1A can be fixed, or immobilized, effectively and removed safely. Besides, because the strongly acid wastewater 1A can be treated at normal temperature without heating it in any step, the wastewater 1A can be treated safely.

## Description

### Technical Field

This invention relates to a method of treating strongly acid wastewater containing toxic substances. Strongly acid wastewater discharged from glass factories, liquid-crystal factories, plating factories, semiconductor factories, etc. may contain toxic substances such as fluorine, boron, lead, arsenic, etc. If such wastewater is discharged as it is, the environment is polluted. Accordingly, it is necessary to remove toxic substances from the wastewater or neutralize toxic substances in the wastewater before such wastewater is discharged from factories. It takes a lot of time, however, to treat wastewater containing strongly acid hydrogen fluoride, boron in the forms of boron trifluoride, etc., and heavy metals such as lead. Besides, it requires special treatment to neutralize such toxic substances. Moreover, recent stricter regulations require more advanced neutralizing treatment.

This invention relates to a method of treating toxic-substance-containing, strongly-acid wastewater to effectively remove such toxic substances as fluorine and boron from the wastewater.

### Background Art

The Japanese Unexamined Patent Publication Nos. 1994-170380, 1995-16577, 1996-66687, and 1997-117775 disclose methods of adding calcium compounds, aluminium compounds, etc. to strongly acid wastewater containing fluorine to fix the fluorine in the wastewater and remove the fluorine as sediment, or precipitate, from the wastewater. These prior arts have certain effect in reducing the concentration of fluorine in wastewater to the level required by the relevant regulation (15 ppm or less).

However, the method disclosed in the Japanese Unexamined Patent Publication No. 1994-170380 includes a step of heating wastewater, requiring a heating apparatus. Besides, it takes time to heat wastewater to certain temperature. Moreover, such heating entails danger.

The methods disclosed in the Japanese Unexamined Patent Publication Nos. 1995-16577, 1996-66687, and 1997-117775 are effective in treating wastewater of which the fluorine concentration is up to tens of thousands of ppm, but it is unclear whether these methods are effective or not in treating such wastewater of which the fluorine concentration is up to several hundred thousand ppm as discharged from glass and liquid-crystal factories.

Any of the above four methods is effective in reducing fluorine concentration but ineffective in reducing boron concentration; therefore, they fail to achieve the much-reduced concentration level of residual boron in wastewater required by the new regulation on wastewater treatment. Under the circumstances, it is hoped for to develop a method of reducing both the concentration level of residual fluorine and that of residual boron in wastewater simultaneously.

### Disclosure of Invention

### Object of Invention

Accordingly, the object of the present invention is to provide a method of treating toxic-substance-containing, strongly-acid wastewater to remove such toxic substances as fluorine, boron, and lead from wastewater safely and without fail.

### Means of solving the Problems

According to the first feature of the present invention, there is provided a method of treating strongly acid wastewater containing toxic substances. The method comprises (i) the step of adding hydroxyapatite to the wastewater to precipitate its toxic substances as solid constituents (hereinafter referred to as "absorbing and precipitating step"), (ii) the step of adding an alkaline substance to the wastewater to neutralize it (hereinafter referred to as "neutralizing step"), (iii) the step of adding a coagulant to the wastewater to coagulate the precipitated solid constituents (hereinafter referred to as "coagulating step"), and (iv) the step of removing the coagulated solid constituents from the wastewater (hereinafter referred to as "removing step").

According to the second feature of the present invention, there is provided a method of treating strongly acid wastewater containing toxic substances. The method comprises (i) the step of adding an alkaline substance to the wastewater to neutralize it and precipitate its toxic substances as solid constituents, (ii) the step of adding a coagulant to the wastewater to coagulate the precipitated solid constituents, (iii) the step of removing the coagulated solid constituents from the wastewater, (iv) the step of adding an acid substance to the wastewater to acidify it, (v) the step of adding hydroxyapatite to the wastewater to precipitate its toxic substances as solid constituents (hereinafter referred to as "absorbing and precipitating step"), (vi) the step of adding an alkaline substance to the wastewater to neutralize it (hereinafter referred to as "neutralizing step"), (vii) the step of adding a coagulant to the wastewater to coagulate the precipitated solid constituents (hereinafter referred to as "coagulating step"), and (viii) the step of removing the coagulated solid constituents from the wastewater (hereinafter referred to as "removing step").

According to the third feature of the present invention, there is provided the method according to the first or second feature, wherein an absorbing and coagulating agent, as well as the hydroxyapatite, is added to the wastewater in the absorbing and precipitating step.

According to the fourth feature of the present invention, there is provided the method according to the first or second feature, wherein an absorbing and coagulating agent is added to the wastewater after the addition of the hydroxyapatite to the wastewater in the absorbing and precipitating step.

According to the fifth feature of the present invention, there is provided the method according to the first, second, third, or fourth feature, wherein the absorbing and precipitating step, the neutralizing step, the coagulating step, the removing step, and the step of turning the treated wastewater into a wastewater of strong acidity are carried out repeatedly.

According to the sixth feature of the present invention, there is provided the method according to the first, second, third, fourth, or fifth feature, wherein the weak acidity of the wastewater after the neutralizing step is changed to alkalinity before the removing step is carried out.

### Effects of the Invention

The advantages offered by the first feature of the present invention are as follows. Because hydroxyapatite is added to the strongly acid wastewater before the strongly acid wastewater is neutralized, the hydroxyapatite absorbs toxic substances in an unstable state in the strongly acid wastewater. Therefore, the absorption rate of toxic substances in this case is high compared with the absorption rate in a case where hydroxyapatite is added to the strongly acid wastewater after the strongly acid wastewater is neutralized by an alkaline substance. Besides, because the coagulant can be added to the wastewater when the wastewater has become acescent, or of weak acidity, the coagulant fixes, or immobilizes, the precipitated solid constituents containing toxic substances without fail. Moreover, because the neutralized wastewater is not hazardous, the precipitated solid constituents containing toxic substances in the neutralized wastewater can be removed from the neutralized wastewater easily, safely, without fail by using a filter or dehydrator. Furthermore, because the wastewater can be treated at normal temperature without heating it in any step, the wastewater can be treated safely.

The advantages offered by the second feature of the present invention are as follows. The wastewater is neutralized and acidified before the absorbing and precipitating step. Thus, the acidity of the wastewater can be adjusted so that the absorbing and precipitating step can be carried out safely. Besides, because toxic substances are removed to a certain degree in the steps of neutralization/precipitation, coagulation, removal before the absorbing and precipitating step, the efficiency of the absorbing and precipitating step is high.

The advantage offered by the third feature of the present invention is as follows. Because toxic substances in the wastewater can be absorbed and precipitated by using absorbing and coagulating agents such as aluminium salt and calcium salt, the concentration of toxic substances in the wastewater can be reduced and the efficiency in removing toxic substances from the wastewater is high.

The advantage offered by the fourth feature of the present invention is as follows. If hydroxyapatite is incapable of removing some kinds of toxic substances, they can be precipitated as solid constituents by using absorbing and coagulating agents such as aluminium salt and calcium salt. Accordingly, the concentration of toxic substances in the wastewater can be reduced effectively.

The advantage offered by the fifth feature of the present invention is as follows. Because the absorbing and precipitating step, the neutralizing step, the coagulating step, the removing step, and the step of turning the treated wastewater into a wastewater of strong acidity are carried out repeatedly, toxic substances in the wastewater can be removed very effectively.

The advantage offered by the sixth feature of the present invention is as follows. Because the weak acidity of the wastewater after the neutralizing step is changed to alkalinity before the removing step is carried out and the alkalinity of the wastewater is changed to strong acidity, toxic substances in the wastewater can be precipitated as normal, or completely neutralized, salt, complexes, coprecipitating mixtures, etc. in solid states even while the alkalinity of the wastewater is changed to strong acidity. Thus, the concentration of toxic substances in the wastewater can be reduced efficiently.

### Brief Description of Drawings

Fig. 1 is a flowchart of a method of treating strongly acid wastewater containing toxic substances according to the present invention.
Fig. 2 is a flowchart of a method, inclusive of pretreatment, of treating strongly acid wastewater containing toxic substances according to the present invention.

### Best Mode for carrying out the Invention

A preferred embodiment of the method of treating strongly acid wastewater containing toxic substances in accordance with the present invention will be described below by referring to drawings.

According to this wastewater-treating method, fluorine, boron, copper, lead, hexavalent, or sexivalent, chromium, arsenic, etc. can effectively and safely be removed from strongly acid wastewater discharged from glass factories, plating factories, semiconductor factories, etc. This wastewater-treating method is very effective especially in treating copper-etching wastewater discharged from semiconductor factories and glass-etching wastewater containing both fluorine and boron discharged from glass factories.

This wastewater-treating method will be detailed below.

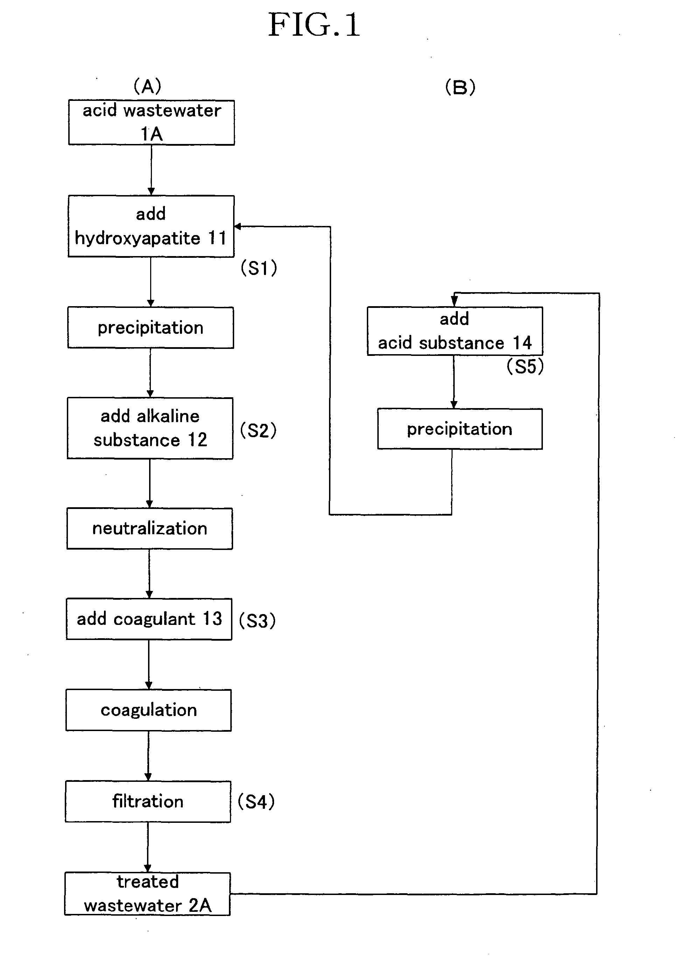

Fig. 1 is a flowchart of the method of treating strongly acid wastewater containing toxic substances according to the present invention. The reference sign "1A" is strongly acid wastewater of pH 0.1 or less such as copper-etching wastewater and glass-etching wastewater containing toxic substances.

When hydroxyapatite 11 is added to the strongly acid wastewater 1A, the hydroxyapatite 11 is suspended in the form of powder or particles in the strongly acid wastewater 1A and, then, absorbs copper ions, fluorine, boron, etc. to precipitate (Step 1). The wastewater in this state is hereinafter referred to as hydroxyapatite-treated strongly acid wastewater 3A. Namely, because the hydroxyapatite 11 absorbs and fixes, or immobilizes, the toxic substances, they can be precipitated as solid constituents.

Next, an alkaline substance 12 is added to the hydroxyapatite-treated strongly acid wastewater 3A to neutralize it, its pH reduced to 7-9 (Step 2). The wastewater in this state is hereinafter referred to as neutralized wastewater 4A. The alkaline substance 12 may be sodium hydroxide, calcium hydroxide, ammonia solution, aluminium hydroxide, aluminium oxide, or the like.

Then, a coagulant 13 is added to the neutralized wastewater 4A for the coagulation of precipitated solid constituents (Step 3). Next, toxic substances are stably filtered out from the neutralized wastewater 4A (Step 4), the neutralized wastewater 4A becoming a treated wastewater 2A of low concentration of toxic substances.

The coagulant 13 may be an inorganic or organic coagulant such aluminium oxide, calcium oxide, calcium hydroxide, magnesium oxide, zeolite, silica gel, or the like.

Instead of filtering out the precipitated solid constituents from the neutralized wastewater 4A, the precipitated solid constituents may be dehydrated and removed. In this case, the neutralized wastewater 4A has to be collected with a dehydrator.

The advantages of the above method of treating strongly acid wastewater containing toxic substances are as follows.
(1) Because hydroxyapatite 11 is added to the strongly acid wastewater 1A before the strongly acid wastewater 1A is neutralized, the hydroxyapatite 11 absorbs toxic substances in an unstable state in the strongly acid wastewater 1A. Therefore, the absorption rate of toxic substances in this case is high compared with the absorption rate in a case where hydroxyapatite 11 is added to the strongly acid wastewater 1A after the strongly acid wastewater 1A is neutralized by an alkaline substance.
(2) Because the hydroxyapatite-treated strongly acid wastewater 3A is neutralized after the hydroxyapatite 11 absorbs toxic substances, the coagulant 13 can be added to the wastewater 3A when the wastewater 3A has become acescent, or of weak acidity. Therefore, if the coagulant 13 does not have enough absorption and coagulation effect in the wastewater 3A of strong acidity, it is capable of always, stably absorbing and coagulating toxic substances without fail in the wastewater 3A of weak acidity. Thus, the coagulant 13 fixes, or immobilizes, the precipitated solid constituents containing toxic substances without fail.
(3) The coagulant 13 is added to the neutralized wastewater 4A. Therefore, if the coagulant 13 does not have enough absorption and coagulation effect in the hydroxyapatite-treated strongly acid wastewater 3A, it is capable of always, stably absorbing and coagulating toxic substances without fail in the neutralized wastewater 4A. The neutralized wastewater 4A is not hazardous, and the precipitated solid constituents containing toxic substances can be removed from the neutralized wastewater 4A easily, safely, without fail by using a filter or dehydrator.

Thus, by using the above wastewater-treating method of the present invention, the toxic substances in the strongly acid wastewater 1A are effectively fixed, or immobilized, and removed safely. Besides, the strongly acid wastewater 1A can be treated at normal temperature without heating it in any step; therefore, the strongly acid wastewater 1A can be treated safely.

Then, an acid substance 14 is added to the above treated wastewater 2A to turn the treated wastewater 2A into a treated and acidified wastewater 5A (Step 5) and Steps 1 to 5 are repeated to reduce the concentration of toxic substances in the wastewater considerably. For example, the concentration of copper and that of hexavalent, or sexivalent, chromium in copper-etching wastewater can be reduced to 1 ppm or less and 0.05 ppm or less, respectively, and the concentration of fluorine and that of boron in glass-etching wastewater can be reduced to 1 ppm or less and 20 ppm or less, respectively.

If the alkaline substance 12 is added to the neutralized wastewater 4A in Step 3, the neutralized wastewater 4A becomes a treated wastewater 2A of alkalinity after Step 4. Then, if acid substance 14 is added to the treated alkaline wastewater 2A, toxic substances are precipitated as neutralized salt while the treated alkaline wastewater 2A is becoming a treated and acidified wastewater 5A of strong acidity. Thus, toxic substances are efficiently removed from the strongly acid wastewater 1A.

The acid substance 14 may be sulfuric acid, hydrochloric acid, nitric acid, or the like.

If an absorbing and coagulating agent such as aluminium salt or calcium salt, together with the hydroxyapatite 11, is added to the strongly acid wastewater 1A in Step 1, the absorbing and coagulating agent as well as the hydroxyapatite 11 absorbs and fixes, or immobilizes, toxic substances in the strongly acid wastewater 1A; therefore, toxic substances can be removed efficiently from the strongly acid wastewater 1A.

Especially if aluminium salt is added to the strongly acid wastewater 1A after (i) hydroxyapatite 11 is added to the strongly acid wastewater 1A and (ii) the alkaline substance 12 is added to the strongly acid wastewater 1A to reduce its pH to 1-3, the aluminium salt is capable of precipitating as solid constituents even toxic substances which the hydroxyapatite 11 alone cannot remove. Thus, toxic substances can be removed more efficiently from the strongly acid wastewater 1A.

Aluminium salt means polyaluminium chloride, aluminium oxide, aluminium sulfate, aluminium hydroxide, and so on. Calcium salt means calcium oxide, calcium hydroxide, calcium carbonate, and so on. In addition to the above, zeolite and organic coagulant are available as absorbing and coagulating agents.

If the strongly acid wastewater 1A contains fluorine and boron of high concentration (over several hundred thousand ppm), the concentration of fluorine and boron is reduced more effectively and safely by carrying out the following pretreatment before Step 1.

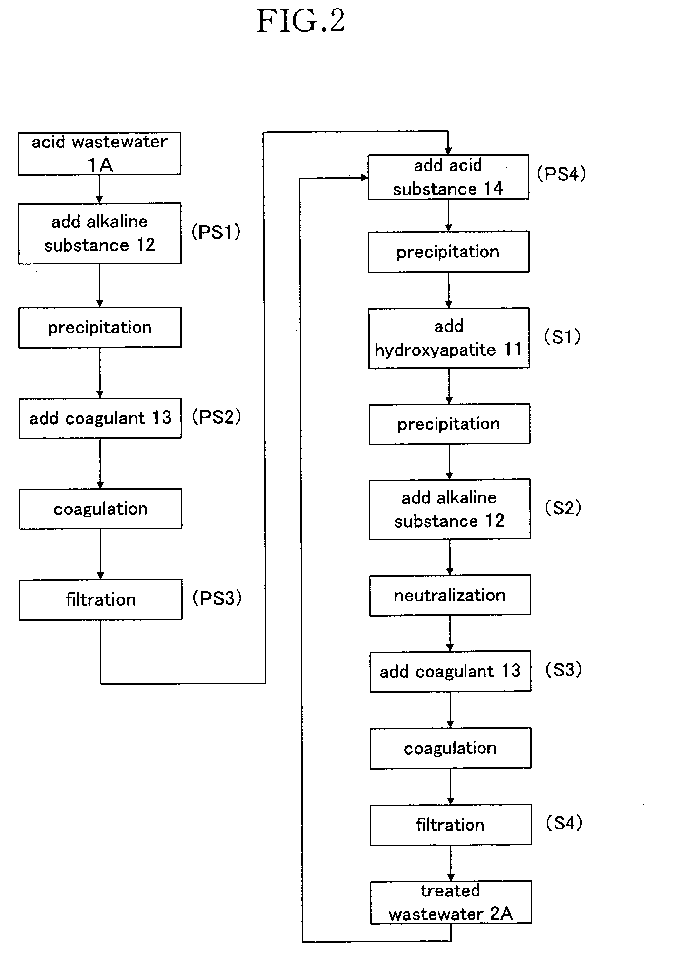

Fig. 2 is a flowchart of the method, inclusive of pretreatment, of treating strongly acid wastewater containing toxic substances according to the present invention. As shown in Fig. 2, an alkaline substance 12 is added to the strongly acid wastewater 1A to neutralize it and precipitate toxic substances as normal, or completely neutralized, salt in a solid state (PreStep 1). Thus, the strongly acid wastewater 1A becomes a neutralized wastewater 4B.

A coagulant 13 is added to the neutralized wastewater 4B to coagulate the precipitated solid constituents (PreStep 2), and the solid constituents are filtered out from the neutralized wastewater 4B (PreStep 3). Thus, toxic substances are removed safely and the neutralized wastewater 4B becomes an after-coagulation/filtration wastewater 5B.

Instead of filtering out the precipitated solid constituents from the neutralized wastewater 4B, the precipitated solid constituents may be dehydrated and removed. In this case, the neutralized wastewater 4B has to be collected with a dehydrator.

Then, an acid substance 14 is added to the after-coagulation/filtration wastewater 5B (PreStep 4). Thus, the after-coagulation/filtration wastewater 5B becomes a strongly acid wastewater 1B, which undergoes the above Steps 1 to 4 to become a treated wastewater 2A of low concentration of fluorine and boron.

Next, the acid substance 14 is again added to the treated wastewater 2A (PreStep 4) and Steps 1 to 4 are repeated to reduce the concentration of fluorine and boron to the levels required by the recent regulation (8 ppm or less as to fluorine and 10 ppm or less as to boron).

Because of PreStep 1 for neutralization and PreStep 4 for acidification, the pH of the strongly acid wastewater 1B can be adjusted to 0.1-1.0. Therefore, Step 1 for absorption and precipitation can be carried out safely. Besides, because toxic substances are removed to a certain degree in PreSteps 1 to 3, the efficiency of absorption and precipitation in Step 1 is high.

### [First Embodiment]

The concentration levels of copper and hexavalent chromium in wastewater containing copper treated by the wastewater-treating method (consisting of Steps 1 to 4 for absorption/precipitation, neutralization, coagulation, and filtration) of the present invention were compared with those in the same wastewater treated by the conventional method of precipitating and removing copper while the wastewater is being neutralized.

The concentration of copper and the concentration of hexavalent-chromium in the wastewater before treatment were 5,000 ppm and 98 ppm, respectively.

The concentration of copper was measured in accordance with JIS K0102-52.2 (flame atomic absorption spectrophotometry); that of hexavalent chromium, in accordance with JIS K0102-65.2 (diphenylcarbazide absorption spectrophotometry).

In the case of the conventional wastewater-treating method, (i) sodium hydroxide was added to one liter of the wastewater to neutralize it (to pH 7-8), (ii) 50 g (equivalent to 5%) of hydroxyapatite was added to the one liter of the wastewater, (iii) a coagulant (SUMIFLOC made by Sumitomo Chemical Co., Ltd.) was added to the wastewater to coagulate the precipitate, and (iv) the coagulated substance was filtered out from the wastewater. The copper concentration and the hexavalent-chromium concentration after the treatment were 1,800 ppm and 85 ppm, respectively.

In the case of the wastewater-treating method of the present invention, (i) 50 g (equivalent to 5%) of hydroxyapatite was added to one liter of the wastewater, (ii) sodium hydroxide was added to the wastewater to neutralize it (to pH 7-8), (iii) a coagulant (SUMIFLOC made by Sumitomo Chemical Co., Ltd.) was added to the wastewater to coagulate the precipitate, and (iv) the coagulated substance was filtered out from the wastewater. The copper concentration and the hexavalent-chromium concentration after the treatment were 10-23 ppm and 1.8-3.4 ppm, respectively.

Next, concentrated sulfuric acid is added to the treated wastewater to reduce its pH to 1 or less and, then, the wastewater underwent the above treatment again. As a result, the copper concentration and the hexavalent-chromium concentration were reduced to 0.6 ppm and 0.01 ppm, respectively. Thus, the wastewater-treating method of the present invention proved (i) highly capable of removing copper, etc. compared with the conventional method and (ii) capable of clearing the levels (3 ppm as to copper and 0.5 ppm as to hexavalent chromium) required by the recent regulation.

### [Second Embodiment]

Wastewater containing fluorine of 160,000-170,000 ppm and boron of 5,000-7,000 ppm was treated by the wastewater-treating method (consisting of PreSteps 1-4 for neutralization, coagulation, filtration, and acidification and Steps 1-4 for absorption/precipitation, neutralization, coagulation, and filtration) of the present invention.

Fluorine concentration was measured in accordance with JIS K0102-47.1 (methylene-blue absorption spectrophotometry); boron concentration, in accordance with JIS K0102-34.1 (lanthanum Alizarin Complexone).

First, one liter of water is added to one liter of the wastewater. Then, about 50 g (equivalent to 5% of the wastewater) of calcium hydroxide is added little by little to the diluted wastewater to raise its pH to 8-10, which was left as it was for one hour or so. Next, a coagulant (SUMIFLOC made by Sumitomo Chemical Co., Ltd.) and water were mixed and about two liters of the mixture was added to the wastewater. Then, the coagulated substance was filtered out from the wastewater. The fluorine concentration and the boron concentration were reduced to 9,700-29,000 ppm and 620-800 ppm, respectively.

Then, concentrated sulfuric acid is added to one liter of the treated wastewater to reduce its pH to 0.2-0.3 and the acidified wastewater was left as it was for about 30 minutes to precipitate a white substance. Next, hydroxyapatite equivalent to 5% was added to the wastewater and, then, calcium hydroxide was added to the wastewater to increase its pH to 2-3. Next, polyaluminium chloride equivalent to 5% was added to the wastewater.

Next, aluminium oxide, calcium oxide, calcium hydroxide, magnesium oxide, etc. were added to the wastewater to raise its pH to 8-9 and, then, the wastewater was left as it was for about 30 minutes. Next, a coagulant (SUMIFLOC made by Sumitomo Chemical Co., Ltd.) and water were mixed and about two liters of the mixture was added to the wastewater. Then, the coagulated substance was filtered out from the wastewater. The fluorine concentration and the boron concentration were reduced to 1.6 ppm and 28 ppm, respectively.

Thus, according to the above wastewater-treating method of the present invention, even wastewater containing fluorine of 160,000-170,000 ppm and boron of 5,000-7,000 ppm can be treated to clear the level of fluorine concentration (8 ppm or less) required by the recent regulation.

Then, concentrated sulfuric acid is added to one liter of the above treated wastewater to reduce its pH to 0.2-0.3 and the acidified wastewater was left as it was for about 30 minutes to precipitate a white substance. Next, Steps 1-4 for absorption/precipitation, neutralization, coagulation, and filtration were again carried out to reduce further the fluorine concentration and the boron concentration to 0.7 ppm and 16 ppm, respectively. Therefore, not only the fluorine-concentration level but also the boron-concentration level required by the recent regulation would be cleared by repeating the above treatment.

Next, aluminium oxide, calcium oxide, calcium hydroxide (slaked lime), magnesium oxide, etc. were added to one liter of the above treated wastewater (treated wastewater 2A) to raise its pH to 11-12 and, then, polyaluminium chloride equivalent to 5% was added to the wastewater to reduce its pH to 3-4. Next, aluminium oxide, calcium oxide, calcium hydroxide, magnesium oxide, etc. were added to the wastewater to raise its pH to 8-9 and, then, the wastewater was left as it was for about 30 minutes. Next, two liters of the mixture of water and an organic coagulant (SUMIFLOC, etc.) was added to the wastewater and the coagulated substance was filtered out from the wastewater. The concentration of fluorine and that of boron in the wastewater were reduced to 0.8 ppm and 18 ppm, respectively. Therefore, not only the fluorine-concentration level but also the boron-concentration level required by the recent regulation would be cleared by repeating the above treatment.

### Industrial Applicability

The method of treating strongly acid wastewater containing toxic substances of the present invention is suitable for the removal of fluorine, boron, copper, lead, arsenic, cadmium, hexavalent chromium, manganese, selenium, etc. from strongly acid wastewater discharged from glass factories, liquid-crystal factories, plating factories, semiconductor factories, iron-mining factories, nonferrous metal-mining factories, etc.

## Claims

1. A method of treating strongly acid wastewater containing toxic substances, comprising:
the step of adding hydroxyapatite to the wastewater to precipitate its toxic substances as solid constituents (hereinafter referred to as "absorbing and precipitating step");
the step of adding an alkaline substance to the wastewater to neutralize it (hereinafter referred to as "neutralizing step");
the step of adding a coagulant to the wastewater to coagulate the precipitated solid constituents (hereinafter referred to as "coagulating step"); and
the step of removing the coagulated solid constituents from the wastewater (hereinafter referred to as "removing step").

2. A method of treating strongly acid wastewater containing toxic substances, comprising:
the step of adding an alkaline substance to the wastewater to neutralize it and precipitate its toxic substances as solid constituents;
the step of adding a coagulant to the wastewater to coagulate the precipitated solid constituents;
the step of removing the coagulated solid constituents from the wastewater;
the step of adding an acid substance to the wastewater to acidify it;
the step of adding hydroxyapatite to the wastewater to precipitate its toxic substances as solid constituents (hereinafter referred to as "absorbing and precipitating step");
the step of adding an alkaline substance to the wastewater to neutralize it (hereinafter referred to as "neutralizing step");
the step of adding a coagulant to the wastewater to coagulate the precipitated solid constituents (hereinafter referred to as "coagulating step"); and
the step of removing the coagulated solid constituents from the wastewater (hereinafter referred to as "removing step").

3. The method according to claim 1 or 2, wherein an absorbing and coagulating agent, as well as the hydroxyapatite, is added to the wastewater in the absorbing and precipitating step.

4. The method according to claim 1 or 2, wherein an absorbing and coagulating agent is added to the wastewater after the addition of the hydroxyapatite to the wastewater in the absorbing and precipitating step.

5. The method according to claim 1, 2, 3, or 4, wherein the absorbing and precipitating step, the neutralizing step, the coagulating step, the removing step, and the step of turning the treated wastewater into a wastewater of strong acidity are carried out repeatedly.

6. The method according to claim 1, 2, 3, 4, or 5, wherein the weak acidity of the wastewater after the neutralizing step is changed to alkalinity before the removing step is carried out.
